# EUROPEAN PATENT APPLICATION

(11) **EP 3 432 237 A1**
(43) Date of publication of application: **23.01.2019**
(21) Application number: 18184660.1
(22) Date of filing: 20.07.2018
(51) Int. Cl.: G06Q 20/12, G06Q 20/20, G06Q 20/22

(54) **PAYMENT APPARATUS AND METHOD OF CONTROLLING THE SAME**

(30) Priority: 21.07.2017 JP 2017141775
(71) Applicant: Toshiba TEC Kabushiki Kaisha, Tokyo 141-8562 (JP)
(72) Inventor: FURUYA, Toshihiko, Shinagawa-ku,, Tokyo 141-8562 (JP)
(74) Representative: Takeuchi, Maya

(57) **Abstract**

According to an embodiment, there is provided a payment apparatus, which uses one of a plurality of available payment methods and executes payment processing of a registered product to be sold, the payment apparatus includes: a display that displays information regarding the plurality of available payment methods; a memory that stores a control program for payment processing using the plurality of available payment methods; and a controller that determines whether or not each of the plurality of available payment methods is usable, displays, on the display, each of the payment methods determined to be usable by the determination of the payment methods before starting the payment processing, and makes payment for the registered product according to the control program by using one of the payment methods determined to be usable by the determination of the payment methods.

## Description

### FIELD

An embodiment to be described here generally relates to a payment apparatus and a method of controlling the payment apparatus.

### BACKGROUND

In the past, a payment apparatus such as a POS (Point Of Sales) terminal has been used in a retail store such as a supermarket. The payment apparatus includes a change machine that automatically deposits money received from a customer and pays change.

Further, in a retail store, also a payment apparatus (settlement apparatus) of a system called "semi-self or the like in which a clerk uses a register apparatus to register a product and a customer himself/herself pays for the product, or a payment apparatus of a system called "self" in which the customer himself/herself registers a product and pays for the product is used. In the past, for the semi-self payment apparatus (settlement apparatus), a system having a function of informing whether or not cash payment is possible by displaying the state of the types of money housed in the change machine on the register apparatus has been proposed.

Further, in recent years, there are payment apparatuses supporting a plurality of payment methods such as a payment method (electronic payment) using a credit card, electronic money, and the like, in addition to a cash payment method. In a retail store using such a payment apparatus, a payment method that can be used is shown to the customer by presenting, in the vicinity of the payment apparatus, a notice such as a symbol or a message representing a payment method supported by the payment apparatus.

Incidentally, in electronic payment using a credit card, electronic money, or the like, by accessing an external server apparatus providing electronic payment service, information regarding payment is transmitted/received to/from the external server apparatus. For that reason, for example, in the case where communication with the server apparatus cannot be performed due to a network failure or the like, it may be impossible to use electronic payment.

However, with the method of using a notice to show a payment method that can be used, it is difficult to easily reflect the communication state with the server apparatus. For that reason, there is a problem that it is difficult for the customer to check, by the time when the actual payment is performed, whether or not a desired payment method (electronic payment) can be used. Further, in the system having the existing configuration, since it is not possible to support a payment method other than a cash payment method, the above-mentioned problem cannot be solved.

To this end, there is provided, a payment apparatus, which uses one of a plurality of available payment methods and executes payment processing of a registered product to be sold, the payment apparatus comprising: a display that displays information regarding the plurality of available payment methods; a memory that stores a control program for payment processing using the plurality of available payment methods; and a controller that determines whether or not each of the plurality of available payment methods is usable, displays, on the display, each of the payment methods determined to be usable by the determination of the payment methods before starting the payment processing, and makes payment for the registered product according to the control program by using one of the payment methods determined to be usable by the determination of the payment methods.

The payment apparatus may further comprise an input device that inputs identification information identifying the product to be sold, wherein the controller executes registration processing of registering the product to be sold identified by the identification information to be input, and displays, on the display, each of the payment methods determined to be usable by the determination of the payment methods before starting the registration processing.

The payment apparatus may further comprise a register apparatus that registers the product to be sold, the register apparatus including a display.

Preferably, the controller displays, on the display of the register apparatus, each of the payment methods determined to be usable by the determination of the payment methods before starting the registration processing.

Preferably, the controller displays each of the available payment methods, and unusable information representing being unusable in association with the payment methods determined to be usable by the determination of the payment methods among the displayed payment methods.

Preferably, the controller displays, on the display, each of the payment methods determined to be usable by the determination of the payment methods in such a way that the payment methods are selectable, and executes the payment processing of the registered product by using a payment method selected from the displayed payment methods.

Preferably, the controller executes the determination of the payment methods before the registration processing is started.

Preferably, the controller executes the determination of the payment methods at timing when start of the registration processing is instructed.

Preferably, the available payment methods include an electronic payment method of making payment by electronic transmission/reception of information to/from an external server.

Preferably, the controller excludes, where the controller makes payment for the registered product by using the electronic payment method and then executes the determination of the payment methods, the electronic payment method from a target for the next determination of the payment methods.

Preferably, the available payment methods include a cash payment method, and
the controller determines whether or not the cash payment method is usable, at timing of finishing the payment for the registered product by using the cash payment method.

The present invention further relates to a method of controlling a payment apparatus, which includes a display that displays information regarding a plurality of available payment methods and a memory that stores a control program for payment processing using the plurality of available payment methods, the payment apparatus executing payment processing of a registered product to be sold by using one of the plurality of available payment methods, the method comprising: determining whether or not each of the plurality of available payment methods is usable; displaying, on the display, each of the payment methods determined to be usable by the determination of the payment methods before starting the payment processing; and making payment for the registered product according to the control program by using one of the payment methods determined to be usable by the determination of the payment methods.

### BRIEF DESCRIPTION OF THE DRAWINGS

Fig. 1 is a diagram showing an example of a checkout system according to a first embodiment;
Fig. 2 is a perspective view of the appearance of a self-POS terminal according to the first embodiment as seen from the operator side;
Fig. 3 is a block diagram showing an example of hardware of the self-POS terminal according to the first embodiment;
Fig. 4 is a block diagram showing an example of functions of the self-POS terminal according to the first embodiment;
Fig. 5 is a diagram showing an example of a transaction start screen according to the first embodiment;
Fig. 6 is a diagram showing still another example of the transaction start screen according to the first embodiment;
Fig. 7A is a diagram showing still another example of the transaction start screen according to the first embodiment;
Fig. 7B is a diagram showing still another example of the transaction start screen according to the first embodiment;
Fig. 8 is a flowchart showing sales data processing executed by the self-POS terminal according to the first embodiment;
Fig. 9 is a diagram showing an example of a system configuration of a checkout system according to a second embodiment;
Fig. 10 is a diagram schematically showing an example of the layout of a register apparatus and a payment apparatus according to the second embodiment;
Fig. 11 is a perspective view of the appearance of the register apparatus according to the second embodiment as seen from the operator side;
Fig. 12 is a diagram showing an example of hardware configurations of the register apparatus and the payment apparatus according to the second embodiment;
Fig. 13 is a block diagram showing an example of function configurations of the register apparatus and the payment apparatus according to the second embodiment;
Fig. 14 is a diagram showing an example of a state screen according to the second embodiment; and
Fig. 15 is a flowchart showing an example of sales data processing executed by the register apparatus and the payment apparatus according to the second embodiment.

### DETAILED DESCRIPTION

According to one embodiment, a payment apparatus uses one of a plurality of available payment methods and executes payment processing of a registered product to be sold. The payment apparatus includes: a display; a memory; and a controller. The display displays information regarding the plurality of available payment methods. The memory stores a control program for payment processing using the plurality of available payment methods. The controller determines whether or not each of the plurality of available payment methods is usable. The controller displays, on the display, each of the payment methods determined to be usable by the determination of the payment methods before starting the payment processing. The controller makes payment for the registered product according to the control program by using one of the payment methods determined to be usable by the determination of the payment methods.

Hereinafter, a payment apparatus, a method of controlling the payment apparatus, and a program for the control method according to an embodiment will be described in detail with reference to the drawings. Hereinafter, an example in which the embodiment is applied to a sales data processing apparatus and a payment apparatus used in a retail store (store) such as a supermarket will be described. However, the present disclosure is not limited to the embodiment. Note that in the drawings, the same reference symbols indicate the same or similar portions.

### [First Embodiment]

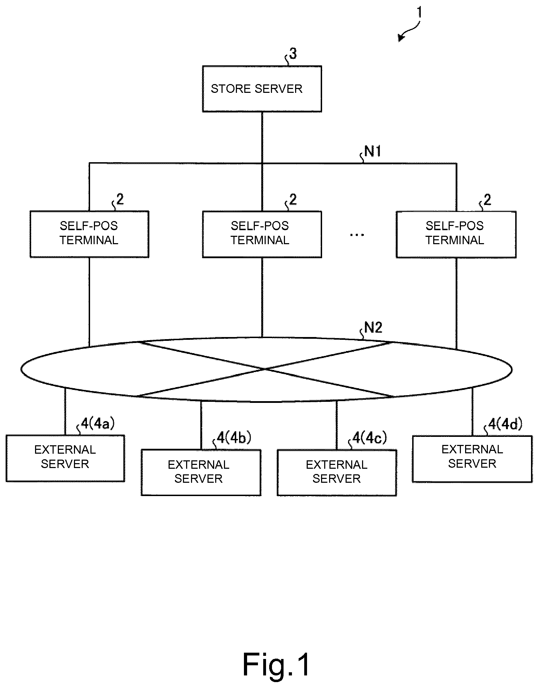

Fig. 1 is a diagram showing an example of a checkout system 1 according to a first embodiment. The checkout system 1 includes self-POS terminals 2 and a store server 3. The self-POS terminals 2 and the store server 3 are connected to each other via a network N1. The network N1 is, for example, a wired or wireless in-store LAN (Local Area Network). Note that the number of self-POS terminals 2 to be connected to the network N1 is not particularly limited.

The self-POS terminals 2 are each an example of a payment apparatus or a sales data processing apparatus. The self-POS terminal 2 is a sales data processing apparatus of a checkout system called "self' or the like. A customer himself/herself operates the self-POS terminal 2 to execute registration processing of registering a product to be sold and payment processing on the registered product in sales data processing.

The store server 3 is a server apparatus such as a personal computer that manages the self-POS terminals 2. For example, the store server 3 stores a product master (not shown) in a memory (not shown), and provides the product master to each of the self-POS terminals 2. Here, the product master represents data in which a product code capable of identifying a product to be sold in a store, a product name, a unit price, and the like are associated with the product for each product. Further, for example, the store server 3 collects, from each of the self-POS terminals 2, transaction data in which the content of transaction is recorded, and stores the collected transaction data in the memory (not shown).

Further, the self-POS terminal 2 are connected to external servers 4 (4a to 4d) via a network N2. The network N2 is, for example, the Internet. Further, the network N2 may include an independent line (dedicated line) for each of the external servers 4.

The external servers 4 are each a server apparatus that provides electronic payment service such as credit payment service and electronic money payment service. In the present embodiment, assumption is made that the external server 4a is a server apparatus that provides credit payment service. Further, assumption is made that the external servers 4b to 4d are server apparatuses that provide different types (brands) of electronic money payment service. Note that the number of external servers 4 and the type of electronic payment service are not particularly limited.

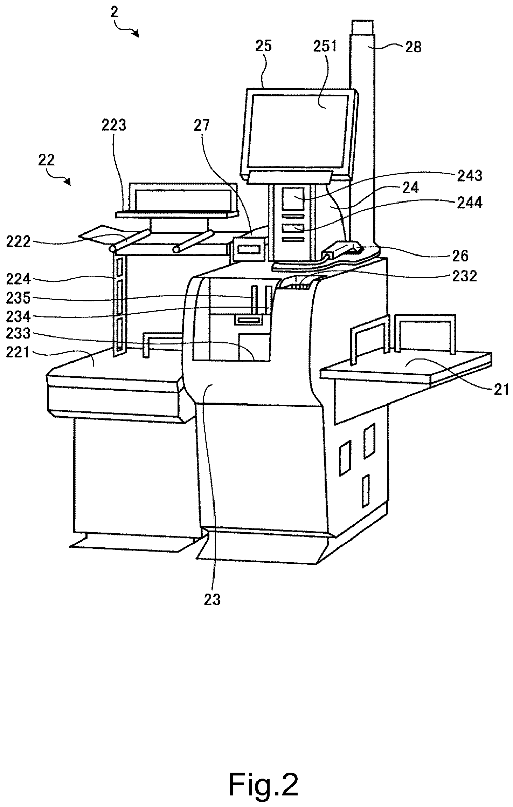

Next, the appearance of the self-POS terminal 2 will be described. Fig. 2 is a perspective view of the appearance of the self-POS terminal 2 as seen from the operator side.

The self-POS terminal 2 includes a first loading table 21 provided on the front right side in Fig. 2, a second loading table 22 provided on the front left side, and a first casing 23 provided at the front center. The operator such as a customer places, on the first loading table 21, a basket or the like in which collected products are put. Further, the operator places, on the second loading table 22, a bag in which the registered product is to be put. The operator uses an apparatus placed on the first casing 23 to register the product taken out from the basket. Then, the operator puts the registered product in the bag placed on the second loading table 22. The operator performs this registration operation on each product collected in the basket. When the registration operation on each product is completed, the operator uses a device housed in the first casing 23 to perform a payment operation on the registered product. With such a procedure, the operator performs the registration operation and the payment operation.

More specifically, the second loading table 22 includes a pedestal 221, a bag hook 222, and a temporary table 223. The bag hook 222 and the temporary table 223 are provided above the pedestal 221 by being supported by a supporting column 224 provided on the pedestal 221. The pedestal 221 is a table on which a product or the like unsuitable for being put in a bag such as a product larger than the bag is placed. The bag hook 222 is a hook that suspends a bag in which the registered product is to be put. The temporary table 223 is a table on which a product that needs to be carefully packed such as a fragile product is temporarily placed.

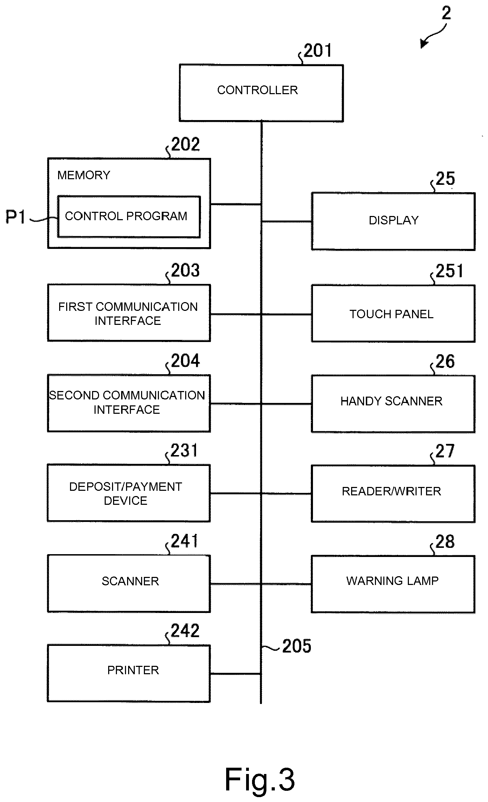

The first casing 23 contains a deposit/payment device 231 (see Fig. 3) that deposits and pays coins, bills, and the like. Further, the first casing 23 includes a coin slot 232, a coin payout port 233, a bill slot 234, and a bill payout port 235. The coin slot 232 is a deposit slot of a coin to be deposited in the deposit/payment device 231 by the customer as money for the product. The coin payout port 233 is a payment port of a coin to be paid from the deposit/payment device 231 as change. The bill slot 234 is a deposit slot of a bill to be deposited in the deposit/payment device 231 by the customer as money for the product. The bill payout port 235 is a payment port of a bill to be paid from the deposit/payment device 231 as change. Note that the amount (or number) of bills and coins housed in the deposit/payment device 231 is calculated for each type of money by a known technology.

The self-POS terminal 2 includes a second casing 24, a display 25, a handy scanner 26, a reader/writer 27, and a warning lamp 28 on the upper surface of the first casing 23.

The second casing 24 houses a scanner 241 (see Fig. 3) and a printer 242 (see Fig. 3) therein. The scanner 241 is an example of an input apparatus that inputs identification information. The identification information is information for identifying a product, e.g., a product code. The second casing 24 includes a reading window 243 over which a product is passed by the customer (operator) to cause the scanner 241 to read the product code of the product. The reading window 243 transmits laser light emitted by the scanner 241 to the outside of the second casing 24, and transmits the reflected light of the laser light to the inside of the second casing 24. Note that the scanner 241 may be an imaging device that captures an image of the product and reads the product code or the like from the captured image.

The second casing 24 includes a receipt issuing port 244 that issues a receipt or the like output by the printer 242. The printer 242 issues, from the receipt issuing port 244, a receipt obtained by printing, on a sheet, sales information regarding the product on which transaction processing is performed.

Further, the second casing 24 supports the display 25 provided on the upper portion of the second casing 24. The display 25 is, for example, a liquid crystal display. The display 25 displays product information and the like of the product on which sales registration is performed. Further, the display 25 includes a touch panel 251 (see Fig. 3) for the customer to operate the self-POS terminal 2. The touch panel 251 detects an operated (touched) position on the display 25, and thereby determines that an operation corresponding to the display element displayed on the display 25 has been input. With such determination, the touch panel 251 regards that a key displayed on the display 25 has been operated, and accepts the operation of the key.

The handy scanner 26 is a hand-held scanner. The handy scanner 26 is used when it is difficult for the customer to pass the product over the reading window 243, e.g., when the product is heavy and when the product is large.

The reader/writer 27 is a device that reads and writes information regarding electronic payment from a storage medium such as a credit card and a card medium used for electronic payment using electronic money or the like.

The warning lamp 28 emits light, and thereby notifies the clerk of, for example, occurrence of an abnormality in the self-POS terminal 2. The warning lamp 28 blinks in red or the like in the case where an abnormality occurs in the self-POS terminal 2, for example.

Next, the hardware configuration of various apparatuses of the checkout system 1 will be described. Fig. 3 is a block diagram showing an example of the hardware configuration of the self-POS terminal 2.

As shown in Fig. 3, the self-POS terminal 2 includes a controller 201, a memory 202, a first communication interface 203, a second communication interface 204, the deposit/payment device 231, the scanner 241, the printer 242, the display 25, the touch panel 251, the handy scanner 26, the reader/writer 27, and the warning lamp 28. These devices are connected to each other via a system bus 205 such as a data bus and an address bus.

The controller 201 is a computer that controls the operation of the entire self-POS terminal 2 to realize various functions of the self-POS terminal 2. The controller 201 includes a processor, a ROM (Read Only Memory), and a RAM (Random Access Memory). The processor is, for example, a CPU (Central Processing Unit), and collectively controls the operation of the self-POS terminal 2. The ROM is a storage medium that stores various programs and data. The RAM is a storage medium that temporarily stores various programs and rewrites various types of data. The processor uses the RAM as a work area, and executes the programs stored in the ROM, the memory 202, and the like.

The memory 202 is a memory such as an HDD (Hard Disk Drive) and an SSD (Solid State Drive). The memory 202 stores a control program P1. The control program P1 is a program for causing the operating system and the self-POS terminal 2 to exhibit the functions. The control program P1 includes a program for realizing the characteristic functions according to the present embodiment. Further, the memory 202 stores the product master (not shown) provided from the store server 3.

The first communication interface 203 communicates with the store server 3 via the network N1. The second communication interface 204 communicates with the external servers 4 (4a to 4d) via the network N2. Note that the second communication interface 204 may individually include a dedicated communication interface for each of the external servers 4.

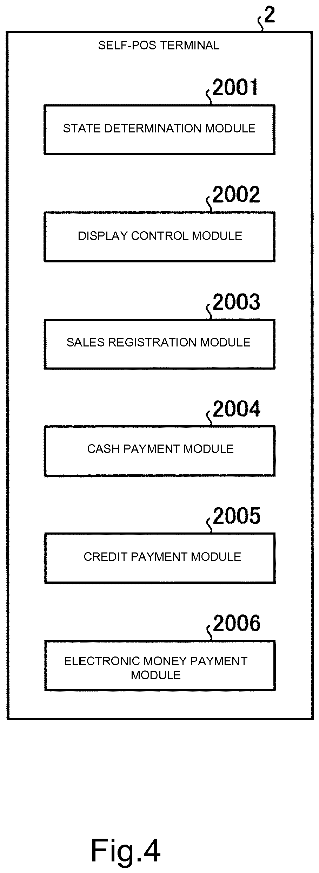

Next, the characteristic functions of the self-POS terminal 2 will be described. Fig. 4 is a block diagram showing an example of the function configuration of the self-POS terminal 2.

The controller 201 of the self-POS terminal 2 develops the control program P1 of the memory 202 in the RAM, operates according to the control program P1, and thereby generates function modules shown in Fig. 4 on the RAM. Specifically, the controller 201 realizes the function modules, i.e., a state determination module 2001, a display control module 2002, a sales registration module 2003, a cash payment module 2004, a credit payment module 2005, and an electronic money payment module 2006.

The state determination module 2001 is an example of a determination means. The state determination module 2001 executes state determination processing of determining whether or not each of payment methods that can be supported by the self-POS terminal 2 itself is usable. The payment methods that can be supported by the self-POS terminal 2 itself represent the type of payment methods that can be handled by the payment functions (the cash payment module 2004, the credit payment module 2005, and the electronic money payment module 2006) of the self-POS terminal 2 itself. Here, the type of payment methods can be roughly classified into payment using cash and electronic payment such as credit payment and electronic money payment. Further, in the case of electronic payment, the type of payment methods represents the type of the brand that issues a credit card and the type of the brand that provides electronic money service.

Specifically, the state determination module 2001 accesses each of the external servers 4 (4a to 4d) via the second communication interface 204, and thereby checks the communication state with the respective external servers 4. The state determination module 2001 determines, under condition that the communication with the external server 4 can be checked, that the payment method (payment service) provided by the external server 4 can be used. Meanwhile, in the case where the communication with the external server 4 cannot be checked due to a network error or the like, the state determination module 2001 determines that the payment method provided by the external server 4 is unusable.

For example, in the case where the communication with the external server 4a cannot be checked, the state determination module 2001 determines that the payment method provided by the external server 4a (hereinafter, referred to as the credit payment) is unusable. For example, in the case where the communication with any of the external servers 4b to 4d cannot be checked, the state determination module 2001 determines that the payment method provided by the corresponding external server 4 (hereinafter, referred to as the electronic money payment) is unusable. Note that the state determination module 2001 may cooperate with the credit payment module 2005 and the electronic money payment module 2006 to check the communication state with the external servers 4 (4a and 4b).

Further, the state determination module 2001 acquires, for each type of money, the amount (or number) of money from the deposit/payment device 231. The state determination module 2001 determines, on the basis of the condition of the amount of money for disabling (or enabling) the payment using cash (hereinafter, referred to as cash payment) set in setting information in advance, whether or not cash payment can be made with the amount of money housed in the deposit/payment device 231 acquired for each type of money. Here, the condition of the amount of money is not particularly limited, and may be arbitrarily set. For example, by setting a threshold value for each type of money, a condition for disabling the cash payment may be set in the case of being a near-empty state indicating the remaining amount of money is low.

Note that the timing of the state determination processing executed by the state determination module 2001 is not particularly limited. However, it is favorable to execute the state determination processing before the customer starts registering a product. For example, the state determination module 2001 executes the state determination processing at predetermined time intervals (e.g., every 5 minutes) until the operation of the self-POS terminal 2 is started. Further, for example, the state determination module 2001 executes the state determination processing after the operation of the self-POS terminal 2 is started and before the registration of a product is started. Further, for example, in order to prepare for the transaction with the next customer, the state determination module 2001 executes the state determination processing after the transaction (payment processing) with the previous customer is finished and before the operation of the self-POS terminal 2 or registration of the product by the next customer is started.

Further, the state determination module 2001 may change the timing of executing the state determination processing for each payment method. For example, regarding electronic payment such as the credit payment and the electronic money payment, the state determination processing may be executed at the timing when a predetermined time period has elapsed since the last payment. Accordingly, the electronic payment that has not been used for the predetermined time period may be a target for the state determination processing. Further, regarding electronic payment such as the credit payment and the electronic money payment, the electronic payment used in the previous transaction (payment processing) may be considered to be usable, and excluded from the target for the state determination processing. Further, regarding the cash payment, the state determination processing may be executed at the timing when the amount of money housed in the deposit/payment device 231 is changed, e.g., timing when the cash payment is finished.

The display control module 2002 is an example of a display control means. The display control module 2002 controls the display 25, and thereby displays various screens on the display 25. For example, the display control module 2002 displays a transaction start screen for starting the operation of the self-POS terminal 2 on the display 25. Further, the display control module 2002 displays, on the basis of the state determination result by the state determination module 2001, the payment method that can be used by the self-POS terminal 2 itself, on the transaction start screen.

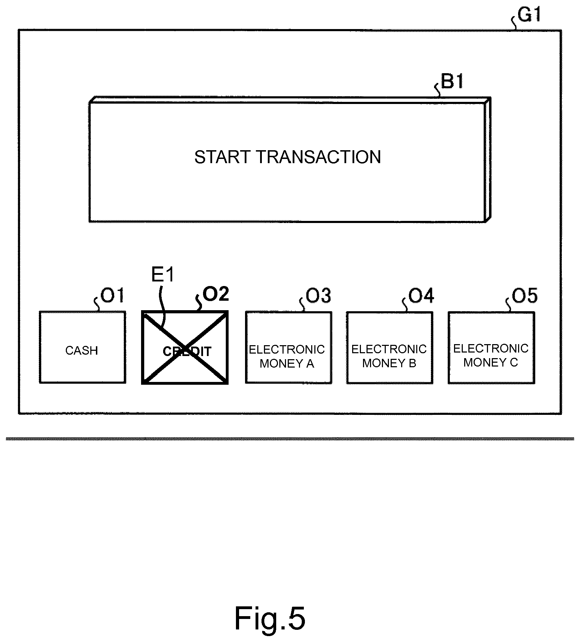

Fig. 5 is a diagram showing an example of the transaction start screen. As shown in Fig. 5, a transaction start screen G1 includes a transaction start button B1 for instructing the start of a transaction. Here, the transaction represents a time period in which sales registration of a product and payment processing are performed for one customer. When the controller 201 accepts the operation of the transaction start button B1, the sales registration module 2003, the cash payment module 2004, the credit payment module 2005, and the electronic money payment module 2006 cooperate with each other, and the self-POS terminal 2 (controller 201) starts transaction processing.

Further, objects O1 to O5 each representing a payment method that can be supported by the self-POS terminal 2 itself are displayed below the transaction start screen G1.
Here the object O1 represents the cash payment.
The object O2 represents the credit payment.
The objects O3 to O5 each represent a different type of electronic money payment.

Further, Fig. 5 shows an example in which it is determined that the credit payment is unusable. An unusable information E1 ("x" in Fig. 5) representing being unusable is displayed in association with the corresponding object O2. Specifically, the display control module 2002 displays the unusable information E1 representing being unusable on the transaction start screen G1 in association with the object of the payment method determined to be unusable. In other words, the display control module 2002 identifiably displays, on the transaction start screen G1, payment methods that can be currently used among the payment methods that can be supported by the self-POS terminal 2 itself.

As described above, the display control module 2002 presents the payment method that can be used by the self-POS terminal 2 itself on the transaction start screen G1 before starting transaction. Accordingly, the customer is capable of easily checking the payment method that can be used by the self-POS terminal 2 before starting transaction via the self-POS terminal 2. Therefore, it is possible to prevent a situation that the customer cannot check whether or not a desired payment method can be used until the time when the payment is actually made, and improve the convenience of payment for the product.

Note that the transaction start screen is not limited to the example shown in Fig. 5. For example, the display control module 2002 may control the display 25 so that the object of the payment method determined to be unusable by the state determination module 2001 is not displayed on the transaction start screen.

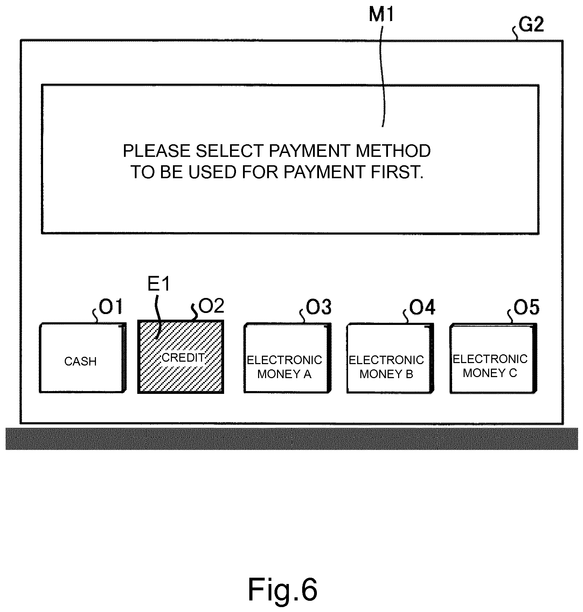

Further, as shown in Fig. 6, the display control module 2002 may provide, as another transaction start screen, a transaction start screen for causing the customer to select a payment method at the time of starting transaction.

Fig. 6 is a diagram showing another example of the transaction start screen. On a transaction start screen G2, a message M1 prompting selection of a payment method and the objects O1 to O5 each representing a payment method that can be supported by the self-POS terminal 2 itself are displayed. Here, the objects O1 to O5 are each displayed as a selectable operation element such as a button. Further, Fig. 6 shows a screen example in which it is determined that the credit payment is unusable. The unusable information E1 (hatched portion in Fig. 6) is displayed in association with the corresponding object O2.

In Fig. 6, when one of the objects O1 to O5 is selected, the self-POS terminal 2 (controller 201) starts transaction. In other words, the controller 201 causes, after registering a product, any of the above-mentioned payment modules 2004 to 2006 corresponding to the payment method of the selected object to execute payment processing. Note that in the case of the transaction start screen G2, it is favorable that the display control module 2002 invalidates the selection operation on the object of the payment method determined to be unusable, and thereby performs control so that the corresponding payment method is not selected.

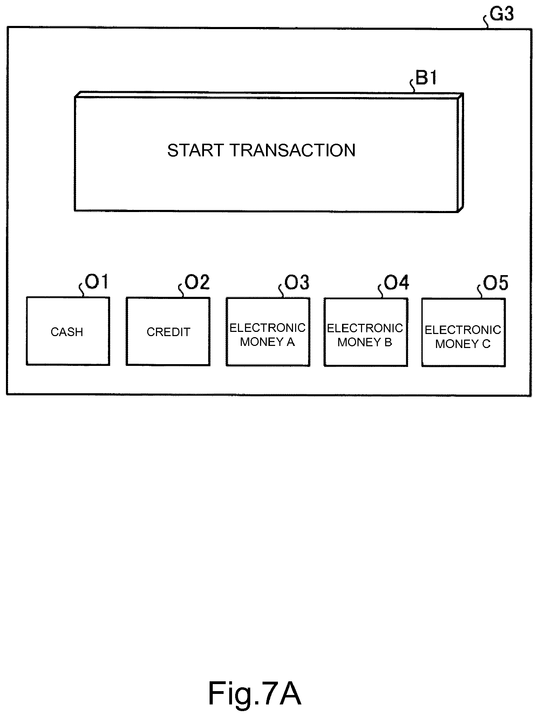

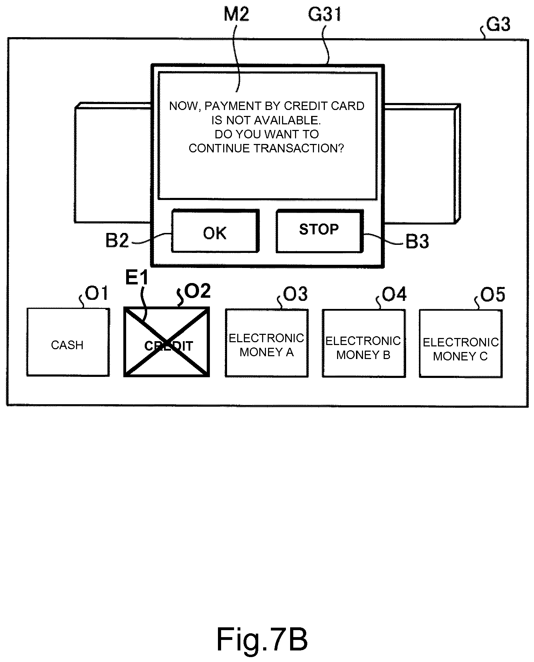

Further, for example, in the form where the state determination module 2001 executes the state determination processing in response to an operation start instruction by the self-POS terminal 2, the display control module 2002 may display a transaction start screen corresponding to this form as shown in Figs. 7.

Figs. 7 are each a diagram showing another example of the transaction start screen. As shown in Fig. 7A, a transaction start screen G3 has a screen configuration similar to that of the transaction start screen G1 shown in Fig. 5. Here, Fig. 7A shows the state before the operation of the self-POS terminal 2 is started, i.e., the state before the transaction start button B1 is operated. Note that in the case where the state determination module 2001 starts the state determination processing in response to the operation start instruction, since the state determination processing is not executed at the stage of Fig. 7A, the unusable information E1 is not displayed on the transaction start screen G3.

In Fig. 7A, when the transaction start button B1 is operated, the state determination module 2001 starts the state determination processing. Here, in the case where there is a payment method determined to be unusable, the display control module 2002 interrupts the transaction, and displays, on the transaction start screen G3, the unusable information E1 in association with the object of the payment method determined to be unusable (see Fig. 7B).

Fig. 7B shows a screen example in which it is determined that the credit payment is unusable. As shown in Fig. 7B, the display control module 2002 displays, on the transaction start screen G3, the unusable information E1 ("x" in Fig. 7B) representing being unusable in association with the object O2 of the credit payment determined to be unusable. Further, the display control module 2002 displays, on the transaction start screen G3, a notification screen G31 that includes a message M2 notifying that the credit payment is unusable.

The notification screen G31 includes an OK button B2 for instructing to continue the transaction, and a stop button B3 for instructing to stop the transaction. When the OK button B2 accepts an operation, the self-POS terminal 2 (controller 201) cooperates with the sales registration module 2003, the cash payment module 2004, the credit payment module 2005, and the electronic money payment module 2006, and thereby starts (resumes) the transaction. Further, the stop button B3 accepts an operation, the self-POS terminal 2 (controller 201) stops the transaction. As the transaction is stopped, the display control module 2002 deletes display of the unusable information E1 and the notification screen G31. Note that in the case where there is no payment method determined to be unusable, the self-POS terminal 2 (controller 201) starts (continues) the transaction without displaying the unusable information E1 and the notification screen G31.

With reference to Fig. 4 again, when the transaction is started, the display control module 2002 cooperates with the sales registration module 2003, and thereby displays, on the display 25, a product registration screen (not shown) for assisting registration of a product. Further, the display control module 2002 cooperates with the cash payment module 2004, the credit payment module 2005, and the electronic money payment module 2006, and thereby displays, on the display 25, a payment screen (not shown) for assisting payment for a product.

The sales registration module 2003 is an example of a registration means. The sales registration module 2003 executes registration processing of registering a product to be sold. Specifically, when the scanner 241 or the handy scanner 26 reads a product code, the sales registration module 2003 identifies the product corresponding to the product code on the basis of the product master. The sales registration module 2003 stores the product code of the identified product in the RAM or the like in association with the number of sales of the product, the sales amount (unit price x the number of sales) of the product, and the like, and thereby registers the product to be purchased by the customer.

The cash payment module 2004, the credit payment module 2005, and the electronic money payment module 2006 are each an example of a payment means.

The cash payment module 2004 is a functional module that cooperates with the deposit/payment device 231 and thereby executes cash payment. For example, the cash payment module 2004 clears the total amount (or a part of the total amount) of the products registered in one transaction with the amount of money paid by the customer, i.e., the amount of money deposited in the deposit/payment device 231. Further, in the case where there is change, the cash payment module 2004 causes the deposit/payment device 231 to pay the amount of money corresponding to the change.

The credit payment module 2005 is a functional module that cooperates with the reader/writer 27 and the external servers 4a and thereby executes the credit payment. For example, the credit payment module 2005 reads information regarding the credit payment from a credit card held by the customer. The credit payment module 2005 transmits the read information to the external server 4a, and thereby performs authorization (credit inquiry). The credit payment module 2005 uses the credit card for payment of the total amount (or a part of the total amount) of the products registered in one transaction under the condition that a response of payment available has been received from the external server 4a. Note that in the present embodiment, although the self-POS terminal 2 includes one credit payment module 2005, the self-POS terminal 2 may include a dedicated the credit payment module 2005 for each payment method for the credit payment.

The electronic money payment module 2006 is a functional module that cooperates with the reader/writer 27 and the external servers 4b to 4d, and thereby executes electronic money payment. For example, the electronic money payment module 2006 reads information regarding electronic money payment from a storage medium such as an electronic money card and a portable terminal held by the customer. The electronic money payment module 2006 transmits the read information to any one of the external servers 4b to 4d, cooperates with the corresponding external server, and thereby uses electronic money for payment of the total amount (or a part of the total amount) of the products registered in one transaction. Note that in the present embodiment, although the self-POS terminal 2 includes one electronic money payment module 2006, the self-POS terminal 2 may include a dedicated electronic money payment module 2006 for each payment method of electronic money payment (each of the external servers 4b to 4d).

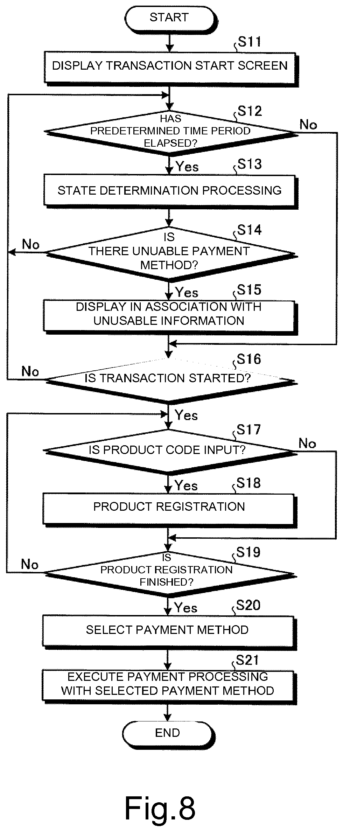

Hereinafter, with reference to Fig. 8, the operation of the self-POS terminal 2 (controller 201) will be described. Fig. 8 is a flowchart showing an example of sales data processing executed by the self-POS terminal 2 (controller 201). Note that regarding this processing, an example in which the state determination module 2001 executes the state determination processing before the operation of the self-POS terminal 2 will be described.

First, in Step S11, the display control module 2002 displays, on the display 25, the transaction start screen G1 (see Fig. 5) presenting payment methods (objects) that can be supported by the self-POS terminal 2 itself. In Step S12, the state determination module 2001 determines whether or not a predetermined time period (e.g., 5 minutes) has elapsed since the previous state determination. Here, in the case where the predetermined time period has not been elapsed (Step S12; No), the processing of the controller 201 proceeds to Step S16.

Further, in the case where the predetermined time period has elapsed (Step S12; Yes), the processing of the controller 201 proceeds to Step S13. In Step S13, the state determination module 2001 executes the state determination processing for each of the payment methods that can be supported by the self-POS terminal 2 itself.

Subsequently, in Step S14, the display control module 2002 determines, on the basis of the determination result in Step S13, whether or not there is a payment method determined to be unusable. Here, in the case where there is not payment method determined to be unusable (Step S14; No), the processing of the controller 201 (display control module 2002) returns to Step S12. Further, in the case where there is a payment method determined to be unusable (Step S14; Yes), the processing of the controller 201 proceeds to Step S15. In Step S15, the display control module 2002 displays, on the transaction start screen G1 of the display 25, the unusable information E1 in association with the object of the corresponding payment method. After the unusable information E1 is displayed, the processing of the controller 201 proceeds to Step S16.

In the following Step S16, the controller 201 determines whether or not the start of transaction has been instructed via the transaction start button B1 or the like. In the case where the start of transaction is not instructed (Step S16; No), the processing of the controller 201 returns to Step S12. Further, in the case where the start of transaction is instructed (StepS16; Yes), the controller 201 causes the sales registration module 2003 to start registration processing. After starting the registration processing, the processing of the controller 201 proceeds to Step S17. In Step S17, the sales registration module 2003 determines whether or not a product code has been input via the scanner 241 or the handy scanner 26.

In the case where a product code is not input via the scanner 241 or the handy scanner 26 (Step S17; No), the processing of the controller 201 (sales registration module 2003) proceeds to Step S19. Further, in Step S19 to be described later, in the case where an operation of instructing to finish the product registration is not accepted (Step S19; No), the processing of the controller 201 (sales registration module 2003) returns to Step S17. In other words, the sales registration module 2003 stands by for the input of a product code via the scanner 241 or the handy scanner 26 (Step S17;No to Step S19; No). When a product code is input (Step S17; Yes), the processing of the controller 201 proceeds to Step S18. The sales registration module 2003 registers the product corresponding to the input product code.

Subsequently, in Step S19, the sales registration module 2003 determines whether or not an operation of instructing to finish the product registration has been accepted. In the case where the finishing of the product registration is not instructed (Step S19; No), the processing of the controller 201 (sales registration module 2003) returns to Step S17. Further, when the finishing of the product registration is instructed (Step S19; Yes), the sales registration module 2003 finishes the registration processing.

Subsequently, in Step S20, the controller 201 selects a payment method for the products registered in the registration processing. For example, in the case where cash is deposited in the deposit/payment device 231, the controller 201 selects cash payment. Further, in the case where a medium used for electronic payment, such as a credit card, is read via the reader/writer 27, the controller 201 selects the payment method corresponding to the medium.

Note that in Step S20, the controller 201 does not select a payment method determined to be unusable. For example, in the case where it is determined that cash payment is unusable, the controller 201 controls opening/closing mechanisms provided in the coin slot 232 and the bill slot 234 to execute processing of closing the slot or the like so that cash payment is not made. Further, in the case where it is determined that specific electronic payment is unusable, the controller 201 cooperates with the display control module 2002, and thereby displays, on the display 25, that the corresponding electronic payment cannot be used.

Further, the display control module 2002 may display, on the display 25, a selection screen for selecting a payment method in Step S20. For example, the display control module 2002 may display, on the selection screen, an operation element capable of selecting a payment method as in the objects O1 to O5 described with reference to Fig. 7. In this case, the controller 201 selects the payment method corresponding to the object operated on the selection screen. Note that regarding the operation element of the payment method determined to be unusable, the display control module 2002 may add and display the unusable information E1, or invalidate the selection operation similarly to the example in Fig. 7. Further, the display control module 2002 may control the display 25 in such a way that the operation element itself of the payment method determined to be unusable is not displayed.

Subsequently, in Step S21, the controller 201 cooperates with the payment module corresponding to the payment method selected in Step S20, and thereby executes payment processing of the products registered in Step S18 to finish the processing.

For example, in the case where the cash payment is selected, the controller 201 causes the cash payment module 2004 to execute payment processing of the registered products. Further, for example, in the case where the credit payment is selected, the controller 201 causes the credit payment module 2005 to execute payment processing of the registered products. Further, for example, in the case where any one of electronic money payments of brands provided by the external servers 4b to 4d is selected, the controller 201 causes the electronic money payment module 2006 to execute payment processing of the registered products with electronic money payment of the selected brand.

As described above, the self-POS terminal 2 displays, on the transaction start screen, the payment method that can be actually used among the payment methods that can be supported by the self-POS terminal 2 itself. Accordingly, the customer is capable of checking the payment method that can be used by each self-POS terminal 2 before starting transaction. As a result, the customer is capable of easily selecting the self-POS terminal 2 capable of using a desired payment method. Therefore, the self-POS terminal 2 is capable of improving the convenience of the customer regarding the payment for products in a self-checkout system.

### [Second Embodiment]

Next, a second embodiment will be described. In the second embodiment, an example in which the embodiment is applied to a checkout method called "semi-self or the like in which a clerk registers a product and a customer himself/herself pays for the product will be described. Note that components similar to those in the first embodiment will be denoted by the same reference symbols and description thereof will be omitted.

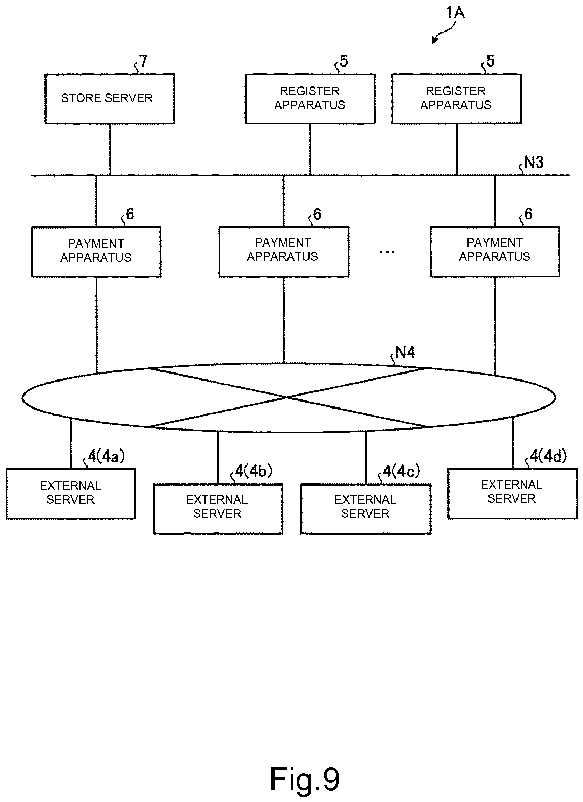

Fig. 9 is a diagram showing an example of a system configuration of a checkout system 1A according to the second embodiment. The checkout system 1A includes register apparatuses 5, payment apparatuses 6, and a store server 7. The register apparatuses 5, the payment apparatuses 6, and the store server 7 are connected to each other via a network N3. The network N3 is, for example, a wired or wireless in-store LAN. Note that the number of register apparatuses 5 and the number of payment apparatuses 6 connected to the network N3 are not particularly limited.

The register apparatuses 5 each execute registration processing of a product to be sold. The payment apparatuses 6 each execute payment processing of the product registered by the register apparatus 5. The register apparatuses 5 and the payment apparatuses 6 are provided separated from each other in a predetermined area in a store.

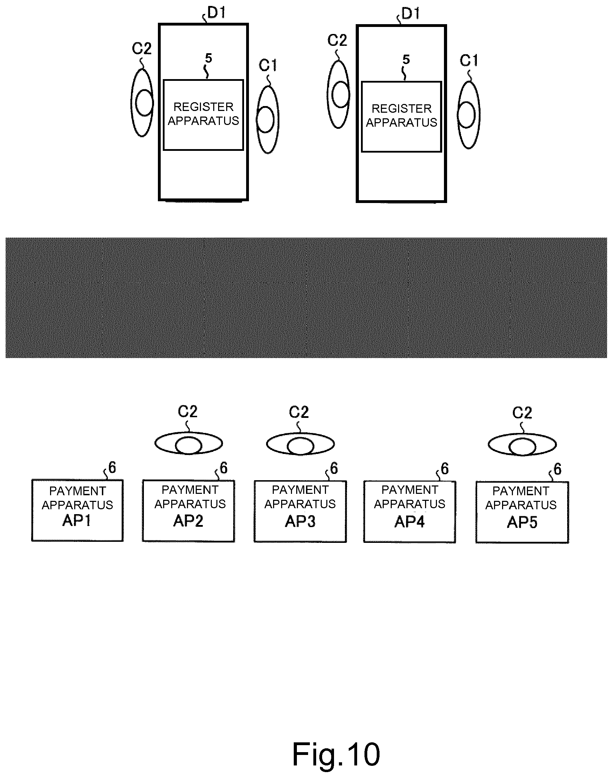

Fig. 10 is a diagram schematically showing an example of the layout of the register apparatuses 5 and the payment apparatuses 6. As shown in Fig. 10, the register apparatuses 5 and the payment apparatuses 6 are arranged separated (isolated) from each other. Here, the register apparatuses 5 are placed on table-like workbenches D1, and operated by clerks C1, for example. Further, customers C2 each put a product to be purchased in a basket or the like, and carry the basket to the workbench D1.

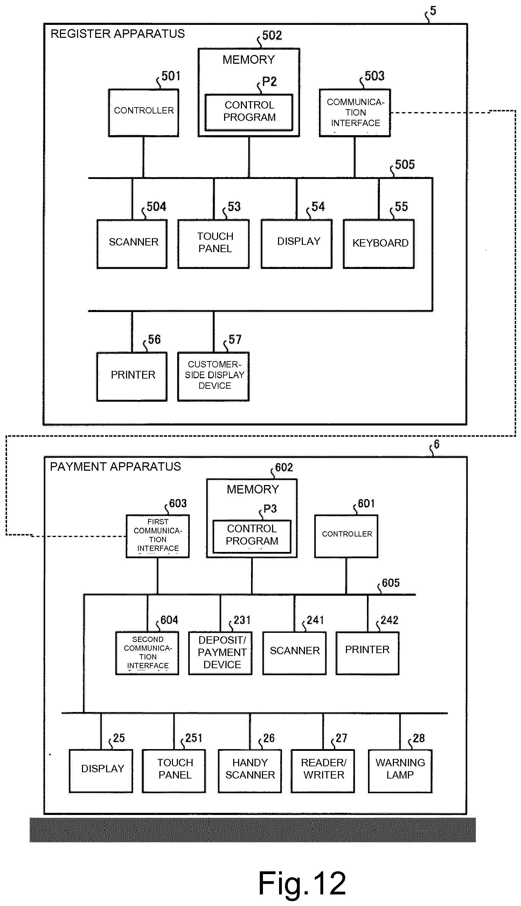

The clerk C1 causes a scanner 504 (see Fig. 12) of the register apparatus 5 to read a code symbol attached to the product brought in by the customer C2 to input the product code of the product to the register apparatus 5. At this time, the clerk C1 operates the register apparatus 5 while facing the customer C2 with the workbench D1 disposed therebetween. When the product registration is completed by the register apparatus 5, the customer C2 carries the registered products to any one of the payment apparatuses 6, operates the one payment apparatus 6, and thereby pays for the products. In other words, the register apparatuses 5 and the payment apparatuses 6 according to the present embodiment constitute a semi-self checkout system.

With reference to Fig. 9 again, the store server 7 is a server apparatus such as a personal computer that manages the register apparatuses 5 and the payment apparatuses 6. For example, the store server 7 stores a product master (not shown) in a memory (not shown), and provides the product master to each of the register apparatuses 5 and the payment apparatuses 6. Further, for example, the store server 7 collects, from each of the register apparatuses 5 and the payment apparatuses 6, transaction data in which the content of transaction is recorded, and stores the collected transaction data in the memory (not shown).

Further, the payment apparatuses 6 are connected to the external servers 4 (4a to 4d) via a network N4. The network N4 is the Internet, a dedicated line, or the like similar to the network N2 described in the first embodiment.

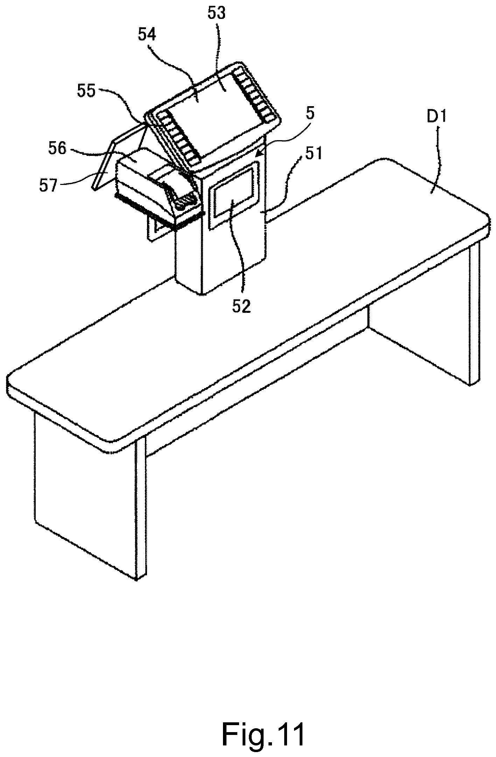

Fig. 11 is a perspective view of the appearance of the register apparatus 5 as seen from the operator (clerk C1) side. As shown in Fig. 11, the register apparatus 5 placed on the upper surface of the workbench D1 is based on a vertical casing 51.

The casing 51 houses the scanner 504 (see Fig. 12) therein. Further, the casing 51 includes a reading window 52 for the scanner 504 to read the product code of a product. The reading window 52 transmits laser light emitted by the scanner 504 to the outside of the casing 51, and transmits the reflected light of the laser light to the inside of the casing 51. Note that the scanner 504 may be an imaging device that captures an image of the product and reads the product code or the like from the captured image.

Further, a display 54 with a touch panel 53, and a keyboard 55 are provided on the upper portion of the casing 51. The display 54 displays the product name, the price, and the like of the product read by the scanner 504. The touch panel 53 and the keyboard 55 are for assisting the input of product data.

A printer 56 is provided on the left side of the register apparatus 5 as seen from the operator (clerk CI). The printer 56 issues, for example, a receipt on which of the breakdown of products registered in one transaction, the total amount of the products, and the like are printed. Further, a customer-side display 57 for the customer C2 is provided on the left side of the register apparatus 5 as seen from the operator side.

Note that the appearance of the payment apparatus 6 is similar to that of the self-POS terminal 2 described with reference to Fig. 2. Note that in the present embodiment, since product registration is performed by the register apparatus 5, the payment apparatus 6 does not necessarily need to include the scanner 241 and the handy scanner 26.

Next, hardware configurations of the register apparatus 5 and the payment apparatus 6 will be described. Fig. 12 is a diagram showing an example of hardware configurations of the register apparatus 5 and the payment apparatus 6.

As shown in Fig. 12, the register apparatus 5 includes a controller 501, a memory 502, a communication interface 503, the scanner 504, the touch panel 53, the display 54, the keyboard 55, the printer 56, and the customer-side display 57. These devices are connected to each other via a system bus 505 such as a data bus and an address bus.

The controller 501 is a computer that controls the operation of the entire register apparatus 5 to realize various functions of the register apparatus 5. The controller 501 includes a processor, a ROM, and a RAM. The processor is, for example, a CPU, and collectively controls the operation of the register apparatus 5. The ROM is a storage medium that stores various programs and data. The RAM is a storage medium that temporarily stores various programs and rewrites various types of data. The processor uses the RAM as a work area, and executes the programs stored in the ROM, the memory 502, and the like.

The memory 502 is a memory such as an HDD and an SSD. The memory 502 stores a control program P2. The control program P2 is a program for causing the operating system and the register apparatus 5 to exhibit the functions. The control program P2 includes a program for realizing the characteristic functions according to the present embodiment. Further, the memory 502 stores the product master (not shown) provided from the store server 7.

The communication interface 503 communicates with the payment apparatuses 6 and the store server 7 via the network N3.

Further, as shown in Fig. 2 and Fig. 12, the payment apparatus 6 includes a controller 601, a memory 602, a first communication interface 603, a second communication interface 604, the deposit/payment device 231, the scanner 241, the printer 242, the display 25, the touch panel 251, the handy scanner 26, the reader/writer 27, and the warning lamp 28. These devices are connected to each other via a system bus 605 such as a data bus and an address bus.

The controller 601 is a computer that controls the operation of the entire payment apparatus 6 to realize various functions of the payment apparatus 6. The controller 601 includes a processor, a ROM, and a RAM. The processor is, for example, a CPU, and collectively controls the operation of the payment apparatus 6. The ROM is a storage medium that stores various programs and data. The RAM is a storage medium that temporarily stores various programs and rewrites various types of data. The processor uses the RAM as a work area, and executes the programs stored in the ROM, the memory 602, and the like.

The memory 602 is a memory such as an HDD and an SSD. The memory 602 stores a control program P3. The control program P3 is a program for causing the operating system and the payment apparatus 6 to exhibit the functions. The control program P3 includes a program for realizing the characteristic functions according to the present embodiment. Further, the memory 602 stores the product master (not shown) provided from the store server 7.

The first communication interface 603 communicates with the register apparatuses 5 and the store server 7 via the network N3. The second communication interface 604 communicates with the external servers 4 (4a to 4d) via the network N4. Note that the second communication interface 604 may individually include a dedicated communication interface for each of the external servers 4 to be communicated.

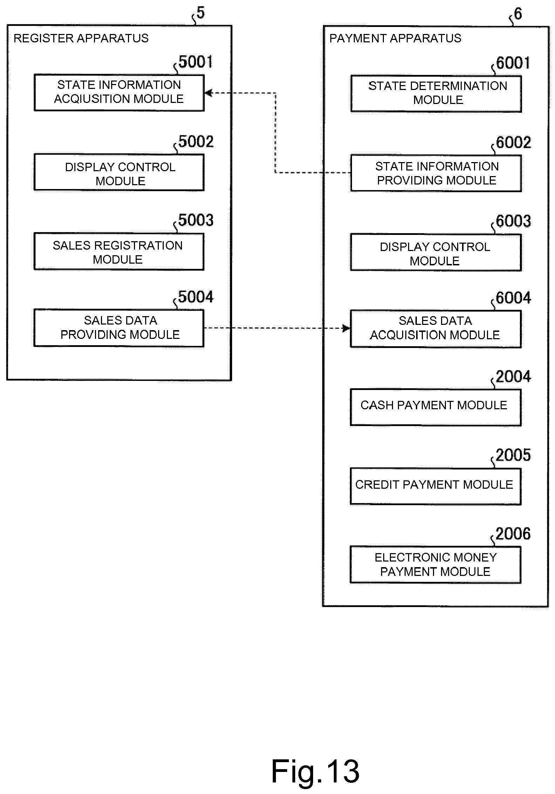

Next, the characteristic functions of the register apparatus 5 and the payment apparatus 6 will be described. Fig. 13 is a block diagram showing an example of function configurations of the register apparatus 5 and the payment apparatus 6.

The controller 501 of the register apparatus 5 develops the control program P2 of the memory 502 in the RAM, operates according to the control program P2, and thereby generates function modules shown in Fig. 13 on the RAM. Specifically, the controller 501 realizes the function modules, i.e., a state information acquisition module 5001, a display control module 5002, a sales registration module 5003, and a sales data providing module 5004.

The state information acquisition module 5001 acquires state information provided from each of the payment apparatuses 6 via the communication interface 503. Here, the state information includes an identifier capable of identifying the payment apparatus 6 as the providing source, information indicating payment methods that can be supported by the payment apparatus 6, and information indicating whether or not the payment method is usable.

The method of acquiring the state information and the acquisition timing are not particularly limited, and various forms are available. For example, the state information acquisition module 5001 may acquire state information provided from the payment apparatus 6 as needed or periodically. Further, for example, the state information acquisition module 5001 may transmit a request for acquiring state information to each of the payment apparatuses 6 to acquire state information provided from the payment apparatuses 6. In the latter case, for example, the state information acquisition module 5001 may transmit the acquisition request at the timing when the start of product registration (transaction) is instructed via the touch panel 53 or the keyboard 55.

The display control module 5002 controls the display 54 and the customer-side display 57 to display various screens. For example, the display control module 5002 displays, on the display 54, an operation screen for instructing to start product registration and a product registration screen for assisting product registration (none of them is shown).

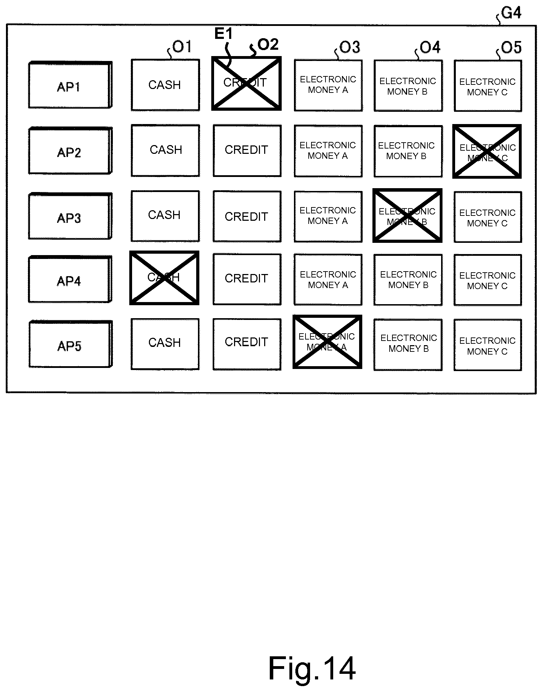

Further, the display control module 5002 cooperates with the state information acquisition module 5001 and the payment apparatus 6, and thereby functions also as a display control means of the payment apparatus 6. Specifically, when the state information acquisition module 5001 acquires state information, the display control module 5002 displays, on the display 54, a state screen representing the payment method that can be used by each of the payment apparatuses 6, on the basis of the state information. Further, when the content of the state information is updated, the display control module 5002 updates display of a state screen G4 (see Fig. 14) on the basis of the state information.

Fig. 14 is a diagram showing an example of the state screen. As shown in Fig. 14, on the state screen G4, identifiers (AP1 to AP5) representing the payment apparatuses 6, payment methods that can be supported by the payment apparatuses 6, and information indicating whether or not the payment method is usable are displayed. Here, the identifiers "AP1 to AP5" correspond to "AP1 to AP5" of the payment apparatuses 6 shown in Fig. 10. Further, the objects O1 to O5 associated with the payment apparatuses 6 represent each represent the payment method supported by the corresponding payment apparatus 6. Further, regarding the payment method set to be unusable in the state information, the unusable information E1 is displayed in association with the corresponding object.

Note that the display control module 5002 may display the state screen G4 on a part of the above-mentioned transaction start screen and product registration screen, for example. Further, in order to accept the operation of selecting the payment apparatus 6 to be a payment destination, the display control module 5002 may display, by setting the identifiers (AP1 to AP5) of the payment apparatuses 6 displayed on the state screen G4 as operation elements such as buttons, the identifiers of the payment apparatuses 6 in such a way that the identifiers can be selected. Further, in order to accept the operation of selecting the payment apparatus 6 to be a payment destination and a payment method, the display control module 5002 may display, by setting the objects O1 to O5 of the payment methods displayed on the state screen G4 as operation elements such as buttons, the payment apparatuses 6 and the payment method in such a way that the payment apparatuses 6 and the payment method can be selected. In this case, when any one of the objects is selected, the controller 501 accepts the selection of the payment apparatus 6 corresponding to the selected object, and the selection of the payment method corresponding to the selected object.

With reference to Fig. 13 again, the sales registration module 5003 is an example of a registration means. The sales registration module 5003 executes registration processing of registering a product to be sold. Specifically, when the scanner 504 reads a product code, the sales registration module 5003 identifies the product corresponding to the product code on the basis of the product master. The sales registration module 5003 stores the product code of the identified product in the RAM or the like in association with the number of sales of the product, the sales amount (unit price x the number of sales) of the product, and the like, and thereby registers the product to be purchased by the customer C2.

The sales data providing module 5004 provides information regarding the products registered by the sales registration module 5003 in one transaction (hereinafter, referred to as sales data) to one payment apparatus 6 to be a payment destination. The sales data may include the product code, the number of sales, the sales amount, and the like of the registered product. Further, the sales data may include other information. For example, the sales data may include the product name of the registered product, the total amount, and the like. Further, in the case where a payment method is selected by the register apparatus 5, the sales data may include information for designating the selected payment method.

Note that in the present embodiment, assumption is made that the selection of the payment apparatus 6 as a payment destination is performed by the clerk C1 who operates the register apparatus 5. Specifically, the clerk C1 confirms with the customer C2 about a desired payment method before starting product registration or at the time of registering a product. The clerk C1 selects one of the payment apparatuses 6, which is capable of using the payment method desired by the customer C2, on the basis of the state screen G4 displayed on the display 54. The sales data providing module 5004 provides the sales data to the selected payment apparatus 6.

Meanwhile, the controller 601 of the payment apparatus 6 develops the control program P3 of the memory 602 in the RAM, operates according to the control program P3, and thereby generates function modules shown in Fig. 13 on the RAM. Specifically, the controller 601 realizes the function modules, i.e., a state determination module 6001, a state information providing module 6002, a display control module 6003, a sales data acquisition module 6004, the cash payment module 2004, the credit payment module 2005, and the electronic money payment module 2006.

The state determination module 6001 is an example of a determination means. The state determination module 6001 executes state determination processing of determining whether or not each of payment methods that can be supported by the payment apparatus 6 itself is usable. Since the state determination processing executed by the state determination module 6001 is similar to that executed by the state determination module 2001 described in the first embodiment, description thereof will be omitted.

Note that the timing of the state determination processing executed by the state determination module 6001 is not particularly limited similarly to the case of the state determination module 2001. For example, the state determination module 6001 executes the state determination processing at predetermined time intervals (e.g., every 5 minutes) until the operation of the payment apparatus 6 is started. Further, for example, in order to prepare for the transaction with the next customer, the state determination module 6001 executes the state determination processing after the transaction (payment processing) with the previous customer is finished and before the operation of the payment apparatus 6 by the next customer is started. Further, for example, the state determination module 6001 executes the state determination processing at the timing when state information is requested from the register apparatus 5.

Further, the state determination module 6001 may change the timing of executing the state determination processing for each payment method. For example, regarding electronic payment such as the credit payment and the electronic money payment, the state determination module 6001 executes the state determination processing at the timing when a predetermined time period has elapsed since the last payment. Accordingly, the electronic payment that has not been used for the predetermined time period may be a target for the state determination processing. Further, for example, regarding electronic payment such as the credit payment and the electronic money payment, the state determination module 6001 may exclude the electronic payment used in the previous payment processing from the target for the state determination processing. Further, for example, regarding the cash payment, the state determination module 6001 may execute the state determination processing at the timing when the amount of money housed in the deposit/payment device 231 is changed, e.g., timing when the cash payment is finished.

The state information providing module 6002 cooperates with the state information acquisition module 5001 and the display control module 5002 of the register apparatuses 5, and thereby functions as the display control means according to the present embodiment. Specifically, the state information providing module 6002 generates state information on the basis of the result of the state determination processing by the state determination module 6001. The state information includes an identifier for identifying the payment apparatus 6 itself, information indicating payment methods that can be supported by the payment apparatus 6 itself, and information indicating whether or not the payment method is usable. The state information providing module 6002 provides (outputs) the generated state information to the register apparatus 5, and thereby displays, on the display 54 of the register apparatus 5, the screen (state screen G4) corresponding to the state information.

The display control module 6003 controls the display 25 to display various screens on the display 25. For example, the display control module 6003 displays, on the display 25, a payment start screen (not shown) for starting the operation of the payment apparatus 6. Further, the display control module 6003 cooperates with the cash payment module 2004, the credit payment module 2005, and the electronic money payment module 2006, and thereby displays, on the display 25, a payment screen (not shown) for assisting payment for a product. Note that the display control module 6003 may display, on the display 25, a payment start screen similar to the above-mentioned transaction start screen (see Fig. 5 to Fig. 7), on the basis of the results of the state determination processing by the state determination module 6001.

The sales data acquisition module 6004 acquires the sales data provided from the register apparatus 5 via the first communication interface 603. The cash payment module 2004, the credit payment module 2005, and the electronic money payment module 2006 execute payment processing with the corresponding payment method on the basis of the sales data acquired by the sales data acquisition module 6004.

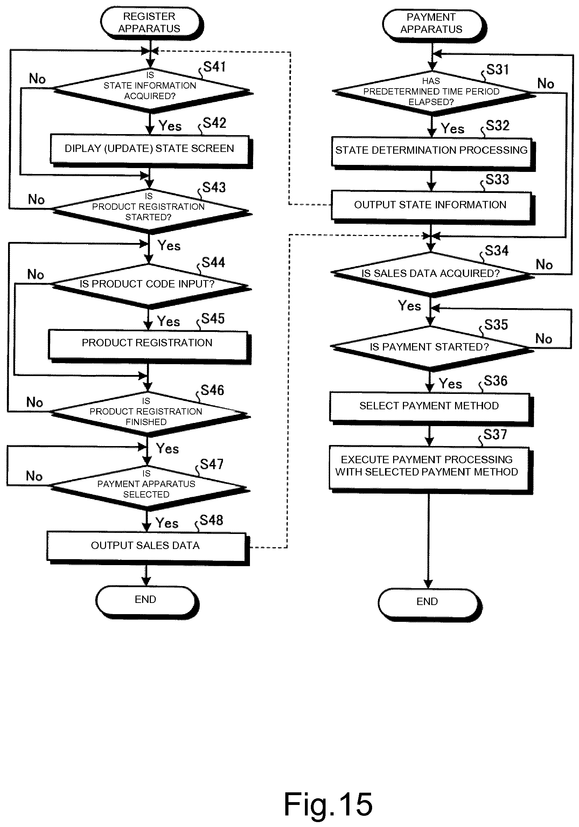

Hereinafter, the operation of the register apparatus 5 and the payment apparatus 6 will be described with reference to Fig. 15. Fig. 15 is a flowchart showing an example of sales data processing executed by the register apparatus 5 and the payment apparatus 6. Note that regarding this processing, an example in which the state determination module 6001 of the payment apparatus 6 executes the state determination processing at predetermined time intervals will be described.

First, the state determination module 6001 of the payment apparatus 6 (controller 601) executes the state determination processing before determining whether or not a predetermined time period (e.g., 5 minutes) has elapsed. Here, in the case where there predetermined time period has not been elapsed (Step S31; No), the processing of the controller 601 proceeds to Step S34.

Further, in the case where the predetermined time period has elapsed (Step S31; Yes), the processing of the controller 601 proceeds to Step S32. In Step S32, the state determination module 6001 executes the state determination processing of determining whether or not each of payment methods that can be supported by the payment apparatus 6 itself is usable. Subsequently, in Step S33, the state information providing module 6002 outputs, to each of the register apparatuses 5, the state information generated on the basis of the results of the state determination processing in Step S32. After outputting the state information to the register apparatuses 5, the processing of the controller 601 proceeds to Step S34.

Meanwhile, in Step S41, the state information acquisition module 5001 of the register apparatus 5 (controller 501) determines whether or not state information has been provided from the payment apparatus 6. In the case where the state information is not provided from the payment apparatus 6 (Step S41; No), the processing of the controller 501 (state information acquisition module 5001) proceeds to Step S43. In Step S43, as will be described later, in the case where an instruction to start product registration is not accepted (Step S43; No), the processing of the controller 501 (state information acquisition module 5001) returns to Step S41. In other words, the state information acquisition module 5001 stands by for the state information being provided from the payment apparatus 6 (Step S41; No to Step S43; No), and acquires, when the state information is provided (Step S41; Yes), the provided state information. Subsequently, in Step S42, the display control module 5002 displays, on the display 54, a state screen representing the state of the payment method that can be used by the payment apparatus 6, on the basis of the state information acquired by the state information acquisition module 5001. After displaying the state screen, the processing of the controller 501 proceeds to Step S43. The controller 501 determines whether or not the start of product registration has been instructed. In the case where an instruction to start product registration is not accepted (Step S43; No), the processing of the controller 501 returns to Step S41. In Step S41, in the case where the state information is not provided (Step S41; No), the processing of the controller 501 proceeds to Step S43 as described above. In other words, the controller 501 of the register apparatus 5 stands by for the instruction to start product registration (Step S43; No to Step S41; No).

When the customer C2 brings in a product to be purchased in such a state, the clerk C1 of the register apparatus 5 operates the touch panel 53 or the keyboard 55, and thereby instructs to start product registration.

When receiving an instruction of start product registration (Step S43; Yes), the controller 501 starts registration processing by the sales registration module 5003. After the registration processing is started, the processing of the controller 501 proceeds to Step S44. In Step S44, the controller 501 (sales registration module) determines whether or not a product code has been input via the scanner 504. In the case where a product code is not input (Step S44; No), the processing of the controller 501 proceeds to Step S46. In Step S46, as will be describe later, in the case where an operation of instructing to finish the product registration (Step S46; No) is not accepted, the processing of the controller 501 returns to Step S44. In other words, the sales registration module 5003 stands by for the input of a product code via the scanner 504 (Step S44; No to Step S46; No). When a product code is input (Step S44; Yes), the processing of the controller 501 proceeds to Step S45. In Step S45, the sales registration module 5003 registers the product corresponding to the product code. Subsequently, in Step S46, the sales registration module 5003 determines whether or not an operation of instructing to finish the product registration has been accepted. When an operation of instructing to finish the product registration is accepted (Step S46; Yes), the sales registration module 5003 finishes the product registration.

Subsequently, in Step S47, the sales data providing module 5004 determines whether or not the payment apparatus 6 as a payment destination has been selected, and stands by for the selection of the payment apparatus 6 as a payment destination (Step S47; No). Here, for example, the clerk C1 of the register apparatus 5 orally confirms with the customer C2 about a payment method desired by the customer C2. The clerk C1 selects, as a payment destination, one of the payment apparatuses 6, which is capable of using the payment method desired by the customer C2, on the basis of the state screen displayed on the display 54. The clerk C1 informs the customer C2 to make payment with the selected payment apparatus 6.

Note that the timing when the clerk C1 confirms with the customer C2 about the payment method is not limited to this example, and may be at the beginning of product registration or during product registration. Further, in the case where the customer-side display 57 includes a touch panel, the display control module 5002 may display, on the customer-side display 57, a screen for prompting selection of a payment method, and accept the selection operation to cause the customer C2 to check the payment method.

When accepting that the payment apparatus 6 as a payment destination has been selected (Step S47; Yes), the sales data providing module 5004 outputs the sales data of the registered products to the selected payment apparatus 6 in Step S48.

Meanwhile, in Step S34, the sales data acquisition module 6004 of the payment apparatus 6 determines whether or not the sales data has been provided from the register apparatus 5. In the case where the sales data is not provided (Step S34; No), the processing of the controller 601 returns to Step S31. In Step S31, as described above, in the case where the predetermined time period has not been elapsed (Step S31; No), the processing of the controller 601 proceeds to Step S34. In other words, the sales data acquisition module 6004 of the payment apparatus 6 waits for the sales data being provided from the register apparatus 5 (Step S34; No to Step S31; No), and acquires, when the sales data is provided, the provided sales data (Step S34; Yes). After acquiring the sales data, the processing of the controller 601 proceeds to Step S35. In Step S35, the controller 601 determines whether or not an instruction to start payment has been accepted.

The controller 601 of the payment apparatus 6 stands by for the instruction to start payment. (Step S35; No). Here, for example, when the customer C2 informed to make payment with the payment apparatus 6 itself instructs to start payment, the controller 601 accepts the instruction to start payment (Step S35; Yes), and starts payment processing.

Subsequently, in Step S36, the controller 601 of the payment apparatus 6 accepts selection of the payment method. Here, the selection of the payment method can be made by the same method as that in the first embodiment. Further, in the case where a payment method is designated in the sales data, the controller 601 of the payment apparatus 6 may determine that the payment method has been selected.

Subsequently, in Step S37, the controller 601 of the payment apparatus 6 cooperates with the payment module (payment means) corresponding to the payment method selected in Step S36, and thereby executes the payment processing of the products included in the sales data to finish this processing.

As described above, the payment apparatus 6 displays, on the display 54 of the register apparatus 5, a state screen showing actually-usable payment methods among the available payment methods. Accordingly, the clerk C1 who operates the register apparatus 5 is capable of checking the payment methods that can be used by each of the register apparatuses 5 before starting the operation of reading a product or at the time of product registration. Therefore, the customer C2 is capable of easily selecting the payment apparatus 6 capable of using the payment method desired by the customer C2. Therefore, the payment apparatus 6 is capable of improving the convenience of the clerk C1 and the customer C2 regarding the payment for products in a semi-self checkout system.

Note that in the present embodiment, various types of information are directly transmitted/received between the register apparatus 5 and the payment apparatus 6. However, the present disclosure is not limited thereto, and the information may be transmitted/received via the store server 7. In this case, for example, the store server 7 may collectively manages the state information generated by each of the payment apparatuses 6, and provide the state information to each of the register apparatuses 5.

Further, in the present embodiment, the clerk C1 selects the payment apparatus 6 as a payment destination, and the sales data is output to the payment apparatus 6. However, the present disclosure is not limited to this embodiment. For example, by selecting, as the payment destination, the payment apparatus 6 that the customer C2 has started operating, the payment apparatus 6 as a payment destination may be automatically selected. This can be realized by, for example, configuring the register apparatus 5 and the payment apparatus 6 as follows. First, the sales registration module 5003 holds the sales data of the product registered in one transaction in association with a transaction code capable of uniquely identifying the transaction. The sales registration module 5003 generates a code symbol representing the transaction code by a barcode or the like at the time of finishing the product registration, and causes the printer 56 to issue a sheet on which the code symbol is printed. After the product registration is finished, the clerk C1 hands the sheet on which the code symbol (transaction code) is printed to the customer C2.

Subsequently, the customer C2 checks the registration start screen (see the transaction start screens G1 to G 3) displayed on each of the payment apparatuses 6, and selects the payment apparatus 6 capable of using the desired payment method. The customer C2 causes the selected payment apparatus 6 to read the code symbol printed on the sheet. The sales data acquisition module 6004 of the payment apparatus 6 transmits a request of acquiring the sales data corresponding to the transaction code to each of the register apparatuses 5 on the basis of the transaction code read from the code symbol. The sales data providing module 5004 regards the payment apparatus 6 that has transmitted the acquisition request as a payment destination, and provides the corresponding sales data to the payment apparatus 6. Accordingly, it is possible to automatically select, as the payment destination, the payment apparatus 6 that the customer C2 has started operating.

Note that the store server 7 may collectively manage a set of the sales data registered by each of the register apparatuses 5 and the transaction code. In this case, the sales registration module 5003 of the register apparatus 5 transmits, to the store server 7, the sales data of the products registered in one transaction in association with a transaction code capable of uniquely identifying the transaction. The store server 7 manages, in the memory, the set of sales data and the transaction code transmitted from each of the register apparatuses 5. When accepting an acquisition request that designates a transaction code from the payment apparatus 6, the store server 7 reads the sales data corresponding to the transaction code from the memory, and provides the read sales data to the payment apparatus 6 as a request source.

For example, in the above-mentioned embodiments, the payment methods that can be supported by the payment apparatuses (the self-POS terminal 2 and the payment apparatus 6) are the same. However, the present disclosure is not limited thereto, and the payment methods that can be supported by the payment apparatuses may differ.

Further, in the above-mentioned embodiments, the payment method that can be supported by the payment apparatus includes cash payment, credit payment, and electronic money payment. However, the payment method that can be supported by the payment apparatus may include another payment method.

Further, the programs executed by the devices of the above-mentioned embodiments are preinstalled in the recording media (ROMs or memory devices) of the devices and provided. However, the present disclosure is not limited thereto, and the above-mentioned programs in installable format files or executable format files may be recorded in computer readable recording media such as CD-ROMs, flexible disks (FDs), CD-Rs, and DVDs (Digital Versatile Disks) and provided. Further, the recording medium is not limited to a medium independent of a computer or an embedded system. For example, examples of the recording medium include a recording medium, which records or temporarily records a program transmitted via a LAN, the Internet, or the like and downloaded.

Further, the programs executed by the devices of the above-mentioned embodiment and modification examples may be stored in a computer connected to a network such as the Internet, downloaded via the network, and provided. Further, the above-mentioned programs may be provided or distributed via a network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A payment apparatus, which uses one of a plurality of available payment methods and executes payment processing of a registered product to be sold, the payment apparatus comprising:
a display that displays information regarding the plurality of available payment methods;
a memory that stores a control program for payment processing using the plurality of available payment methods; and
a controller that
determines whether or not each of the plurality of available payment methods is usable,
displays, on the display, each of the payment methods determined to be usable by the determination of the payment methods before starting the payment processing, and
makes payment for the registered product according to the control program by using one of the payment methods determined to be usable by the determination of the payment methods.

2. The payment apparatus according to claim 1, further comprising
an input device that inputs identification information identifying the product to be sold, wherein
the controller
executes registration processing of registering the product to be sold identified by the identification information to be input, and
displays, on the display, each of the payment methods determined to be usable by the determination of the payment methods before starting the registration processing.

3. The payment apparatus according to claim 1 or 2, further comprising
a register apparatus that registers the product to be sold, the register apparatus including a display, wherein
the controller displays, on the display of the register apparatus, each of the payment methods determined to be usable by the determination of the payment methods before starting the registration processing.

4. The payment apparatus according to any one of claims 1 to 3, wherein
the controller displays
each of the available payment methods, and
unusable information representing being unusable in association with the payment methods determined to be usable by the determination of the payment methods among the displayed payment methods.

5. The payment apparatus according to any one of claims 1 to 4, wherein
the controller
displays, on the display, each of the payment methods determined to be usable by the determination of the payment methods in such a way that the payment methods are selectable, and
executes the payment processing of the registered product by using a payment method selected from the displayed payment methods.

6. The payment apparatus according to any one of claims 1 to 5, wherein
the controller executes the determination of the payment methods before the registration processing is started.

7. The payment apparatus according to any one of claims 1 to 6, wherein
the controller executes the determination of the payment methods at timing when start of the registration processing is instructed.

8. The payment apparatus according to any one of claims 1 to 7, wherein
the available payment methods include an electronic payment method of making payment by electronic transmission/reception of information to/from an external server, and
the controller excludes, where the controller makes payment for the registered product by using the electronic payment method and then executes the determination of the payment methods, the electronic payment method from a target for the next determination of the payment methods.

9. The payment apparatus according to any one of claims 1 to 8, wherein
the available payment methods include a cash payment method, and
the controller determines whether or not the cash payment method is usable, at timing of finishing the payment for the registered product by using the cash payment method.

10. A method of controlling a payment apparatus, which includes a display that displays information regarding a plurality of available payment methods and a memory that stores a control program for payment processing using the plurality of available payment methods, the payment apparatus executing payment processing of a registered product to be sold by using one of the plurality of available payment methods, the method comprising:
determining whether or not each of the plurality of available payment methods is usable;
displaying, on the display, each of the payment methods determined to be usable by the determination of the payment methods before starting the payment processing; and
making payment for the registered product according to the control program by using one of the payment methods determined to be usable by the determination of the payment methods.
